(19) Europäisches Patentamt
European Patent Office
Office européen des brevets

(11) Veröffentlichungsnummer : **0 088 359**
**B1**

(12) # EUROPÄISCHE PATENTSCHRIFT

(45) Veröffentlichungstag der Patentschrift : **22.01.86**

(51) Int. Cl.[4] : **C 07 F 9/38**, C 07 F 9/65, A 61 K 31/66

(21) Anmeldenummer : **83102050.8**

(22) Anmeldetag : **03.03.83**

(54) **Amidinodiphosphonsäuren.**

(30) Priorität : **10.03.82 DE 3208600**

(43) Veröffentlichungstag der Anmeldung : **14.09.83 Patentblatt 83/37**

(45) Bekanntmachung des Hinweises auf die Patenterteilung : **22.01.86 Patentblatt 86/04**

(84) Benannte Vertragsstaaten : **AT BE CH DE FR GB IT LI NL**

(56) Entgegenhaltungen :
**DE-A- 2 316 396**
**DE-A- 2 439 355**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Blum, Helmut**
**Bertha-von-Suttner-Strasse 30**
**D-4000 Düsseldorf 13 (DE)**
Erfinder : **Worms, Karl-Heinz, Dr.**
**An der Jagengrenze 5**
**D-4000 Düsseldorf 13 (DE)**
Erfinder : **Hemmann, geb. Erpenbach, Siglinde**
**Kantstrasse 28**
**D-4005 Meerbusch 1 (DE)**

EP 0 088 359 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind bestimmte Amidinodiphosphonsäuren und ihre Herstellung.

In letzter Zeit sind zahlreiche Polyphosphonsäuren unterschiedlicher Konstitution bekannt geworden und für verschiedene Zwecke, wie Buildersubstanzen und Sequestrierungsmittel sowie als Zusätze zu Gips, vorgeschlagen worden. Insbesondere haben auch stickstoffhaltige Polyphosphonsäuren eine gewisse Bedeutung erlangt. Gegenüber Polyphosphaten haben diese Verbindungen unter anderem den Vorteil, hydrolysebeständig zu sein.

So werden in der DE-A-2 439 355 Phosphonsäuren mit einer guten Impfwirkung sowie ein Verfahren zu ihrer Herstellung beschrieben, nämlich :

N-(Diphosphonomethyl)-formamidin der Formel I

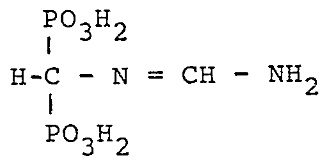

(I)

und N-(Diphosphonomethyl)-N,N'-dimethylformamidin der Formel II

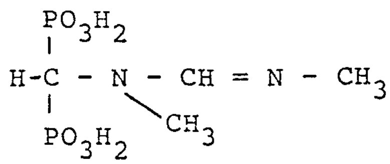

(II)

Es wurde nun gefunden, daß die neuen erfindungsgemäßen Amidinodiphosphonsäuren, das sind : N,N-Dimethyl- bzw. N,N-Diethylamidinomethylendiphosphonsäure, N,N-Dimethyl- bzw. N,N-Diethylamidinopyrrolidinyliden-2,2-diphosphonsäure und N,N-Dimethyl- bzw. N,N-Diethylamidinopiperidinyliden-2,2-diphosphonsäure (vergleiche Patentansprüche 3 bis 5), verbesserte Eigenschaften aufweisen.

Das erfindungsgemäße Verfahren zur Herstellung von Amidinodiphosphonsäuren ist dadurch gekennzeichnet, daß man Diphosphonsäuren der Formeln a)

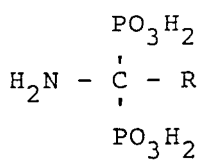

(R = Wasserstoffatom oder Alkylrest mit 1 bis 3 C-Atomen)

oder b)

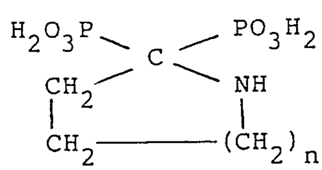

n = 1 oder 2

mit Formamiden in Gegenwart von $POCl_3$ umsetzt und das Reaktionsprodukt hydrolysiert. Die anfallenden Säuren können durch Neutralisation leicht in die entsprechenden Alkali- und Ammoniumsalze überführt werden.

Geeignete Formamide sind Formamid, Monomethylformamid, Dimethylformamid, Monoethylformamid und Diethylformamid.

Es hat sich als zweckmäßig erwiesen, bei der Herstellung die angeführten Ausgangskomponenten, nämlich Aminoalkandiphosphonsäuren : Formamide : $POCl_3$ im Molverhältnis 1 : (1 bis 3) : (1 bis 3) einzusetzen. Die Temperaturen liegen zunächst oberhalb 50 °C. Später werden die Temperaturen von 80 bis 100 °C gesteigert und das Reaktionsprodukt bei diesen Temperaturen mehrere Stunden belassen. Die nachfolgende Hydrolyse läßt sich leicht durchführen, indem ein Zusatz von Wasser zum Reaktionsprodukt erfolgt und dieses in der Hitze in die Säuren überführt wird. Nach dem Abkühlen und der Abfiltration wird zweckmäßigerweise durch Zusatz von Aceton oder aliphatischen Alkoholen, wie Methanol, Ethanol oder Isopropanol, die entsprechende Amidinodiphosphonsäure ausgefällt.

Das Komplexierungsvermögen der so erhaltenen Verbindungen ist gegenüber den Ausgangsprodukten erheblich verbessert. Auch zeigen die erhaltenen Verbindungen, insbesondere die Dimethylamidinomethylendiphosphonsäure, eine gewisse keimhemmende Wirkung gegenüber Testkeimen, wie Streptococcus mutans, Staphylococcus aureus, Candida albicans, Pseudomonas aeruginosa, Escherichia coli.

## Beispiele

Der Anmeldungsgegenstand wird durch die nachstehenden Beispiele näher erläutert.

### Beispiel 1

In ein Gemisch von 0,2 Mol Formamid und 0,6 Mol Phosphorylchlorid wurden langsam 0,2 Mol Aminomethandiphosphonsäure eingetragen und danach eine Stunde auf 60 °C und dann weitere 3 Stunden auf 80 °C erhitzt. Das Reaktionsprodukt wurde durch Aufkochen mit 100 ml Wasser hydrolysiert. Die Lösung wurde nach dem Abkühlen filtriert und die Amidinomethylendiphosphonsäure durch Zusatz von Aceton ausgefällt.

Ausbeuten : 25 % $C_2H_8N_2O_6P_2$

| Analyse | | | | |
|---|---|---|---|---|
| gefunden : | C 10,97 | H 3,69 | N 11,90 | P 28,31 |
| berechnet : | C 11,02 | H 3,70 | N 12,85 | P 28,41 |

### Beispiel 2

In eine Mischung von 0,2 Mol Aminomethandiphosphonsäure in 0,6 Mol Dimethylformamid wurden unter Rühren und Kühlen 0,6 Mol Phosphorylchlorid bis maximal 15 °C zugetropft. Die Reaktionsmischung wurde bei 80 °C 20 Stunden gerührt und dann durch 15 minütiges Aufkochen mit 100 ml Wasser hydrolysiert. Nach dem Abkühlen wurde abfiltriert und aus dem Filtrat mit Aceton die Dimethylamidinomethylendiphosphonsäure ausgefällt.

Ausbeute nach Trocknen bei 60 °C im Vakuum : 41 % $C_4H_{12}N_2O_6P_2$

| Analyse | | | | |
|---|---|---|---|---|
| gefunden : | C 19,20 | H 4,88 | N 11,00 | P 25,10 |
| berechnet : | C 19,51 | H 4,88 | N 11,38 | P 25,20 |

### Beispiel 3

Verwendet man bei sonst gleicher Arbeitsweise wie im Beispiel 2 Diethylformamid als Ausgangskomponente, so erhält man Diethylamidinomethylendiphosphonsäure.

### Beispiel 4

Zu 0,1 Mol Azacyclopentan-2,2-diphosphonsäure und 0,2 Mol Dimethylformamid in 50 ml Chlorbenzol wurden bei 5 bis 10 °C 0,3 Mol Phosphorylchlorid getropft. Dann wurde 14 Stunden auf 80 °C erhitzt. Das beigefarbene Reaktionsprodukt wurde durch 15 minütiges Aufkochen mit 50 ml Wasser hydrolysiert. Die wäßrige Phase wurde abgetrennt und mit 80 ml Ethylalkohol versetzt. Nach 2 Stunden Stehen bei Raumtemperatur wurde abfiltriert und durch weitere Zugabe von Ethylalkohol die Dimethylamidino-pyrrolidinyliden-2,2-diphosphonsäure ausgefällt.

Ausbeuten : 31 % $C_7H_{16}N_2O_6P_2$

| Analyse | | | | |
|---|---|---|---|---|
| gefunden : | C 28,8 | H 5,80 | N 9,14 | P 22,20 |
| berechnet : | C 29,37 | H 5,59 | N 9,79 | P 21,68 |

### Beispiel 5

Verwendet man bei gleicher Arbeitsweise wie im Beispiel 4 0,1 Mol Azacyclohexan-2,2-diphosphonsäure als Ausgangskomponente, so erhält man N,N-Dimethylamidino-piperidinyliden-2,2-diphosphonsäure.

### Beispiel 6

Hampshire-Test

200 mg der unten angegebenen Diphosphonsäure werden in 10 ml $H_2O$ gelöst (mit NaOH auf pH 11 gestellt), mit 100 ml Sodalösung versetzt (14,3 g $NaCO_3 \cdot H_2O/1$). Aus einer Bürette wird dann eine

Calciumsalzlösung (36,8 g $CaCl_2 \cdot 2H_2O/1$) so lange zugetropft, bis gerade eine bleibende Trübung entsteht.

Tabelle

| Substanz | $\frac{\text{mg } CaCO_3}{\text{g Substanz}}$ | |
|---|---|---|
| a) 1-Aminomethan-1,1-diphosphonsäure | 220 | Vergleichssubstanz |
| b) Amidinomethylendiphosphonsäure | 520 | |
| c) N,N-Dimethylamidinomethylendiphosphonsäure | 2.500 | |
| d) Azacycloalkan-2,2-diphosphonsäure | 975 | Vergleichssubstanz |
| e) N,N-Dimethylamidinopyrrolidinyliden-2,2-diphosphonsäure | 2.500 | |

**Patentansprüche**

1. Verfahren zur Herstellung von Amidinodiphosphonsäuren, dadurch gekennzeichnet, daß man Diphosphonsäuren der Formeln a)

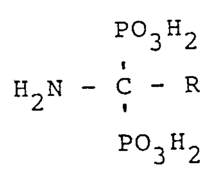

(R = Wasserstoffatom oder Alkylrest mit 1 bis 3 C-Atomen)
oder b)

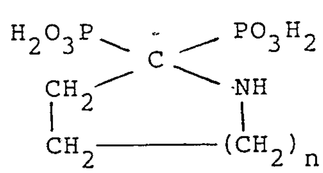

n = 1 oder 2

mit Formamiden aus der Gruppe: Formamid, Monomethylformamid, Dimethylformamid, Monoethylformamid und Diethylformamid in Gegenwart von $POCl_3$ umsetzt und das Reaktionsprodukt hydrolysiert.

2. Verfahren gemäß Anspruch 1, dadurch gekennzeichnet, daß die Ausgangsstoffe Aminoalkandiphosphonsäuren : Formamid : $POCl_3$ im Molverhältnis 1 : (1 bis 3) : (1 bis 3) bei Temperaturen über 50 °C umgesetzt werden.

3. N,N-Dimethyl-beziehungsweise N,N-Diethylamidinomethylendiphosphonsäure der Formel

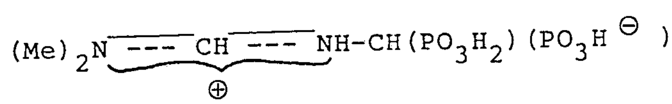

(Me) = Methyl oder Ethyl

4. N,N-Dimethyl-beziehungsweise N,N-Diethyl-amidinopyrrolidinyliden-2,2-diphosphonsäure der Formel

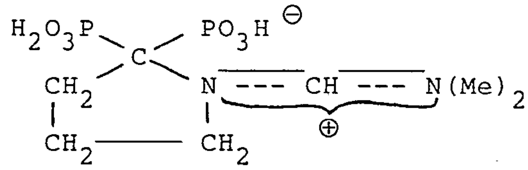

(Me) = Methyl oder Ethyl

5. N,N-Dimethyl-beziehungsweise N,N-Diethyl-amidinopiperidinyliden-2,2-diphosphonsäure der Formel

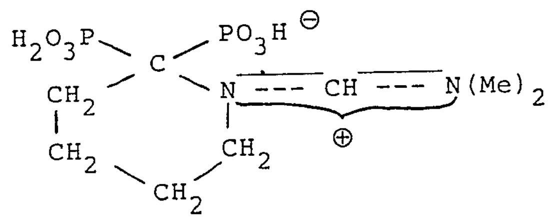

(Me) = Methyl oder Ethyl

**Claims**

1. A process for the production of amidinodiphosphonic acids, characterized in that diphosphonic acids corresponding to the following formulae

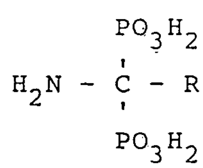

(a)

(R = hydrogen atom or $C_1$-$C_3$ alkyl)

or

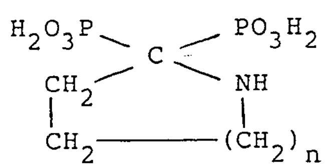

(n = 1 or 2)

(b)

are reacted with formamides from the group comprising formamide, monomethyl formamide, dimethyl formamide, monoethyl formamide and diethyl formamide in the presence of $POCl_3$ and the reaction product is hydrolyzed.

2. A process as claimed in Claim 1, characterized in that the starting materials aminoalkane diphosphonic acids : formamide : $POCl_3$ are reacted in a molar ratio of 1 : (1 to 3) : (1 to 3) at temperatures above 50 °C.

3. N,N-dimethyl or N,N-diethylamidino-methylene diphosphonic acid corresponding to the following formula

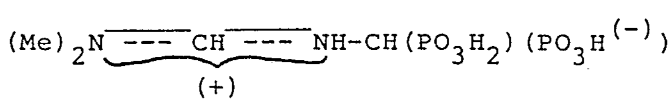

(Me) = methyl or ethyl.

4. N,N-dimethyl or N,N-diethylamidino-pyrrolidinylidene-2,2-diphosphonic acid corresponding to the following formula

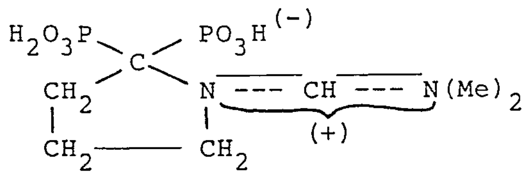

(Me) = methyl or ethyl

5. N,N-dimethyl or N,N-diethylamidino-piperidinylidene-2,2-diphosphonic acid corresponding to the following formula

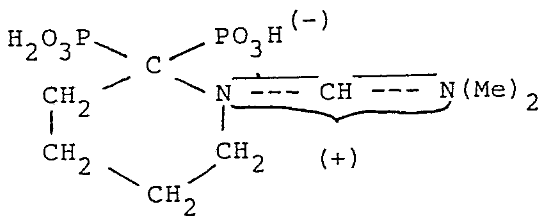

(Me) = methyl or ethyl

**Revendications**

1. Procédé de préparation d'acides amidinodisphosphoniques, caractérisé en ce qu'on fait réagir des acides diphosphoniques de formule a)

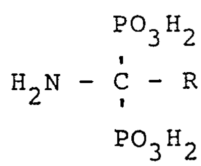

(R = atome d'hydrogène ou radical alcoyle ayant 1 à 3 atomes de carbone) ou b)

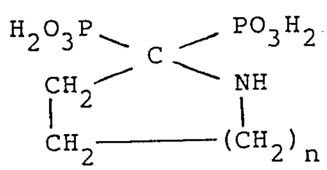

n = 1 ou 2

avec des formamides du groupe : formamide, monométhylformamide, diméthylformamide, monoéthylformamide et diéthylformamide, en présence de $POCl_3$ et on hydrolyse le produit de réaction.

2. Procédé selon la revendication 1, caractérisé en ce qu'on fait réagir à des températures supérieures à 50 °C les matières premières : acides aminoalcane-diphosphoniques : formamide : $POCl_3$ dans le rapport molaire 1 : (1 à 3) : (1 à 3).

3. Acide N,N-diméthyl- ou N,N-diéthylamidinométhylène-diphosphonique de formule :

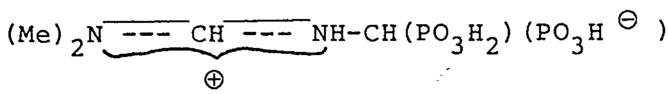

(Me) = méthyle ou éthyle

4. Acide N,N-diméthyl- ou N,N-diéthyl-amidinopyrrolidinylidène-2,2-diphosphonique de formule :

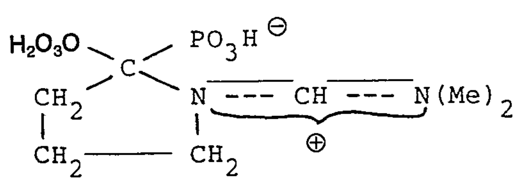

(Me) = méthyle ou éthyle

5. Acide N,N-diméthyl- ou N,N-diéthyl-amidinopipéridinylidène-2,2-diphosphonique de formule :

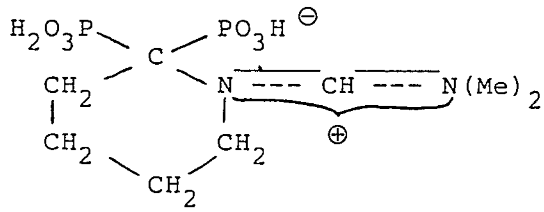

(Me) = méthyle ou éthyle.